# EUROPEAN PATENT SPECIFICATION

(11) **EP 0 482 107 B1**
(45) Date of publication and mention of the grant of the patent: **08.09.1993**
(21) Application number: 90912214.5
(22) Date of filing: 12.07.1990
(51) Int. Cl.: A23C 19/024

(54) **A PROCESS FOR CONTINUOUS PRODUCTION OF COTTAGE CHEESE FROM ULTRAFILTERED MILK**
VERFAHREN ZUR KONTINUIERLICHEN HERSTELLUNG VON "COTTAGE CHEESE" AUS ULTRAFILTRIERTER MILCH
PROCEDE POUR LA FABRICATION EN CONTINU DE FROMAGE BLANC DE TYPE ''COTTAGE CHEESE'' A PARTIR DE LAIT ULTRAFILTRE

(30) Priority: 13.07.1989 DK 3466/89
(43) Date of publication of application: 29.04.1992
(73) Proprietor: MD FOODS A.M.B.A., DK-8260 Viby J (DK)
(72) Inventor: JENSEN, Poul, Fiil, DK-8200 Arhus N (DK); JUULSEN, Frede, DK-8000 Arhus C (DK)
(74) Representative: Nyeng, Joergen
(86) International application number: DK9000185
(87) International publication number: WO9100690

(56) References cited:
- EP-A- 0 297 676
- GB-A- 1 334 688
- US-A- 3 899 595
- US-A- 4 401 679
- US-A- 4 499 109
- Dissertation Abstracts International. B, The sci. and engin., vol. 40, no. 2, 1979; NARASIMHAN R: "An evaluation of heath treatment and ultrafiltration of skim milk for increasing cottage cheese yields", see p. 662
- Proceedings of IDF seminar, Atlanta, Georgia, US, Oct. 1985; ERNSTRAM C.A. et al.: "Properties of products from ultrafiltered whole milk", see p. 21-30

## Description

The invention concerns a process for continuous production of cottage cheese from ultrafiltered milk, wherein curd is produced by acidification, optionally with addition of rennet, and the cheese grains formed by the curd are mixed with dressing, optionally after conventional after-treatment.

Cottage cheese is fresh curd made from skim milk, starter and rennet and mixed with cream and salt. Traditionally, it is produced in a vessel by addition of bacterial starter or chemical acid to pasteurized skim milk at about 32°C, acidification for 8-18 hours in case of bacteriological acidification, and for 3-4 hours in case of chemical acidification, cutting of the coagulum with a wire cutter and subsequent stepwise heating to 55°C within about 1 1/2 hours. Then whey is drained until the cheese grains become visible, and these are washed with cold water. After drainage of water the cheese grains are mixed with dressing consisting of pasteurized and homogenized cream with a 13-16% fat content mixed with a little salt. The finished cottage cheese contains at least 4% fat, and the solids content of the cottage cheese must be at least 20%.

The treatment of the cheese coagulum with cutting, syneresis, heating and washing serves to provide the desired composition, structure and consistency of the cheese grains. This procedure involves a loss of solids, in particular whey protein, of the order of 0.8-0.9% as well as some fine-grained material.

It would be an advantage if the skim milk could be concentrated in advance to a solids content of about 20%, so that the loss involved by syneresis and separation of whey would be avoided, while adapting the manufacturing process for continuous execution.

The US Patent Specification 3899595 discloses a process for continuous production of coagulum for use in cheese making, wherein rennetted or acidified milk is introduced under pulsation into a special hose-shaped conduit with deformable walls, and the coagulum is collected at the outlet end of the conduit. It is stated in the patent specification that it is possible to use ultrafiltered milk with a non-fat solids content of 15-20% by weight in the production of cheese in divided form, such as cottage cheese. However, it is just indicated that cottage cheese can be produced, but it is not possible to deduce anything from the patent specification as to which parameters are to be selected and how these ate to be matched to provide a desired composition and consistency of the cheese grains as well as a better yield and better raw material control in connection with a continuous process.

Accordingly, the object of the invention is to provide a process for continuous production of cottage cheese from ultrafiltered milk, wherein, in a shorter time, a greater yield of cottage cheese per kg of milk and a better process and raw material control ate achieved than in the known processes.

This is obtained by the process of the invention, which is characterized in that milk is subjected to heat treatment at 65-100 °C for from 3 seconds to 15 minutes and, optionally after preacidification to a pH value down to 5.8, is ultrafiltered to a solids content of 18.5-21% by weight, and that the retentate Is heat treated at 65-100 °C for from 3 seconds to 15 minutes and is then either mixed with glucono-δ-lactone (GDL) in an amount giving a final pH value of 4.2-4.7 or is admixed with a thermophilic starter culture and kept at 36-42 °C until the pH value decreases to 5.4, following which the mixture, optionally after addition of a small amount of rennet to improve the consistency of the product, is allowed to coagulate during passage through a coagulator with intermitting feeding and standstill periods, kept at a temperature of 25-35 °C when the mixture has been chemically acidified, and 36-42 °C when starter culture has been added, and the resulting curd having a pH value of 4.2-4.7, which is squeezed out of the coagulator, is cut to cheese grains which are mixed with dressing, optionally after conventional after-treatment.

It is characteristic of the process of the invention
a) that the process is performed continuously with optimization of the individual steps to be carried out in the shortest possible time with perfect control of raw material supply and process conditions;
b) that the milk is concentrated to the final solids content of the cottage cheese in the ultrafiltration so that no syneresis of the cheese coagulum takes place;
c) that, in the chemical acidification, a relatively small amount of acid for preacidification is used and a relatively large amount of glucono-δ-lactone (GDL) for the final acidification, and a thermophilic starter culture is used in the bacteriological acidification;
d) that, after cutting of the cheese coagulum, it is possible to pour the cheese grains directly into a cream dressing without washing.

The milk used is normally skim milk because cottage cheese is normally characterized in that the cheese grains are substantially fat-free, and that the fat content is added with the cream dressing.

The heat treatments of the milk and the retentate serve partly to kill most of the present bacteria and partly to denature the whey proteins so that they bind mote readily to the casein structure of the coagulum and are thus not washed out so easily. Following the initial heat treatment of the milk, there will still be some bacterial germs left, and these will be concentrated together with the solids in the ultrafiltration. It is therefore necessary to heat treat the retentate once more.

The heat treatments are performed at temperatures in the range 65-100 °C, preferably 70-90 °C for periods of from 3 seconds to 15 minutes, preferably 15 seconds to 5 minutes. It is normally so that the higher the temperature used in the heat treatment, the shorter time will this temperature be held to avoid scorching. Generally, the retentate will not be heated to the highest temperatures since it is more concentrated and therefore more sensitive.

Ultrafiltration is performed in conventional equipment, e.g. a DDS UF module 37, and it is performed until full concentration, i.e. to the solids content desired in the finished cottage cheese grains. This may be 18.5-21% by weight, but is at least 20% by weight according to Danish provisions, i.e. in practice 19.5-21% by weight.

The execution of the process of the invention is a little different according to whether chemical acidification or acidification by means of starter culture is selected.

When chemical acidification is used, the heat treated milk is preacidified before ultrafiltration to a pH value of down to 5.8 to enable washing out of calcium during ultrafiltration, which has been found to provide a better consistency of the cheese grains after coagulation. The pH value is not to be reduced below 5.8 to avoid protein precipitations.

Preacidification takes place by direct addition of an edible acid, such as phosphoric acid, citric acid or lactic acid, or by addition of inactivated, bacteriologically acidified skim milk.

The milk is then ultrafiltered, and the retentate is subjected to the second heat treatment as described above. The retentate is subsequently acidified with glucono-δ-lactone (GDL), which has the property that it is slowly hydrolyzed in aqeous solution to gluconic acid which gives the pH reduction. An amount of GDL is used such that a pH value in the coagulum of 4.2-4.7 is obtained after complete hydrolysis. Dependent on the preacidification, this amount will generally be from about 3.5 to about 5% by weight, e.g. 4%. Normally, a small amount of rennet is also added at this stage, such as 0.1-1 g per 100 kg of retentate, e.g. 0.3 g per 100 kg, to improve the consistency of the product so that the cheese grains will be more soft and less crumbled.

The mixture is then immediately sent into a continuous coagulator, preferably of the type consisting of a long coagulator tube in which the mixture is fed periodically at the inlet end of the coagulator tube during feed periods with intermediate standstill periods, the length of a feed period being selected so that no considerable coagulation takes place in the mixture from its introduction into the coagulator tube until the following standstill period, the length of a standstill period being selected so that the mixture, after a standstill period in the coagulator tube, forms a sufficiently firm coagulum for the new mixture fed during the subsequent feed period to be transported towards the outlet end of the coagulator tube as a coherent plug, the rate of introduction of mixture into the coagulator tube and the length of coagulator tube being so adapted that the residence time in the coagulator tube for the curd squeezed out through the outlet end comprises at least one feed period and one standstill period.

In case of acidification with GDL the coagulator is kept at 25-35 °C, and the mixture coagulates during passage with a pH reduction to 4.2-4.7.

In case of acidification with a starter culture, the heat treated milk is ultrafiltered in normal manner without preacidification, and the retentate is subjected to the second heat treatment as described above. Then a thermophilic starter culture is added, e.g. a starter containing Lactobacillus bulgaricus, Streptococcus thermophilus and Lactobacillus helveticus, in a suitable amount to provide a rapid log growth in the retentate, e.g. 7% starter, and the mixture is kept at 36-42 °C until a pH value of down to 5.4 has been obtained. If pH is reduced below 5.4, it will be too difficult to pump the mixture Into the coagulator. Here too, a small amount of rennet is usually added to improve the consistency of the product, as explained above. The mixture is then sent into a continuous coagulator, preferably of the above-mentioned type, which is kept at 36-42 °C, and additional growth of the starter culture with a pH reduction to 4.2-4.7 and coagulation of the mixtures take place during the passage.

The curd squeezed out of the coagulator is cut to four-sided grains having a size of 2-10 mm. These cheese grains fall either directly into a cream dressing to provide finished cottage cheese, or down into permeate from the ultrafiltration in which they are subjected to after-treatment. The after-treatment serves to give the cheese grains a firmer and more rubber-like consistency corresponding to traditional cottage cheese as produced in Denmark today. It comprises heating the mixture with permeate to maximum 55 °C, e.g. 50 °C and washing in cold water with pH 4.2-7.0. After draining of the washing water, the cheese grains are poured into a cream dressing to provide a finished cottage cheese.

The cream dressing is mixed quite conventionally and in conformity with the tastes in the market. It may e.g. consist of cream with a 13.5% fat content admixed with 2% salt and acidified with a conventional starter culture, e.g. BD culture or admixed with a starter distillate as flavour. The cream dressing is usually added in an amount of 70-85% by weight, e.g. 75% by weight, of the cheese grains.

Thus, according to the invention there is provided a process for continuous production of cottage cheese using both chemical and bacteriological acidification. The process takes place much more rapidly than the known processes, it enables current control of the raw material consumption and the process sequence, and it ensures optimum utilization of the proteins of the milk and thus gives an increased yield of cottage cheese in relation to the known processes. The product obtained bears full comparison with traditional cottage cheese and can be adapted to any desired tastes for cottage cheese.

The process of the invention will be illustrated more fully by the following working examples with reference to the drawings, in which
fig. 1 is a process scheme of an embodiment of the process with chemical acidification (direct acidification) and after-treatment of the cheese grains before they are mixed with dressing;
fig. 2 is a process scheme of an embodiment of the process with chemical acidification (direct acidification) is used, and the cheese grains being poured directly into a dressing;
fig. 3 is a process scheme of an embodiment of the process with bacteriological acidification and after-treatment of the cheese grains before they are mixed with dressing; and
fig. 4 is a process scheme of an embodiment of the process, with bacteriological acidification, the cheese grains being poured directly into a dressing.

### EXAMPLE 1

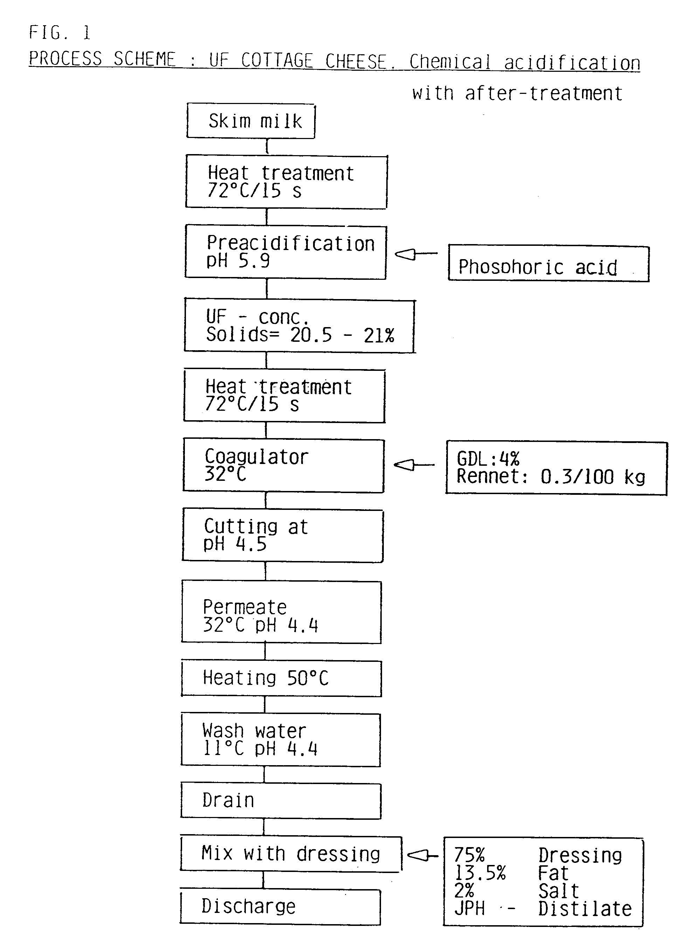

This example follows the process scheme in fig. 1.

Skim milk is heated to 72 °C for 15 seconds in a plate heat exchanger conventionally used for pasteurization. Then 10% aqeous solution of phosphoric acid (H₃PO₄) is added until the milk has a pH value of 5.9. The preacidified skim milk is concentrated by ultrafiltration in a DDS UF module 37 to a solids content of 19.5-21% by weight, and the retentate is heat treated in the same manner as the starting milk at 72 °C for 15 seconds.

Then 4% by weight of GDL and 0.3 g of rennet per 100 kg of retentate are added, and the mixture is immediately introduced into a coagulator held at 32 °C.

The coagulator is a straight tube coagulator provided with a heat jacket. The tube is inclined with the inlet end at the lowest point, and the mixture is introduced through a valve which is operated with intermitting feed and standstill periods. The curd is squeezed out at the outlet end through a wire cutter, and,the strings are cut by a rotating knife.

The passage through the coagulator takes about 2 hours, and the mixture coagulates during the passage to form a curd with a pH value of 4.5 at the outlet from the coagulator. The curd is cut to grains having a size of 4.5 mm, which fall down into a bath of permeate from the ultrafiltration with a temperature of 32 °C and a pH value of 4.4. This bath is heated to 50 °C, and after 15-20 minutes the permeate is drained and the cheese grains are washed in cold (11 °C) water with pH adjusted to 4.4. After drainage of the washing water the cheese grains are mixed with a cream dressing in the weight ratio 4:3. The cream dressing consists of cream with a fat content of 13.5% by weight admixed with 2% by weight of salt and starter distillate as flavour.

The finished cottage cheese is packaged and stored in a cold store.

In this procedure with after-treatment of the cheese grains, 5.4 kg of skim milk with a 3.6% protein content are used per kg of after-treated cheese grains, while 6.5 kg of skim milk are used per kg of cheese grains in the traditional production of cottage cheese. The yield is calculated as an average of 6 tests.

### EXAMPLE 2

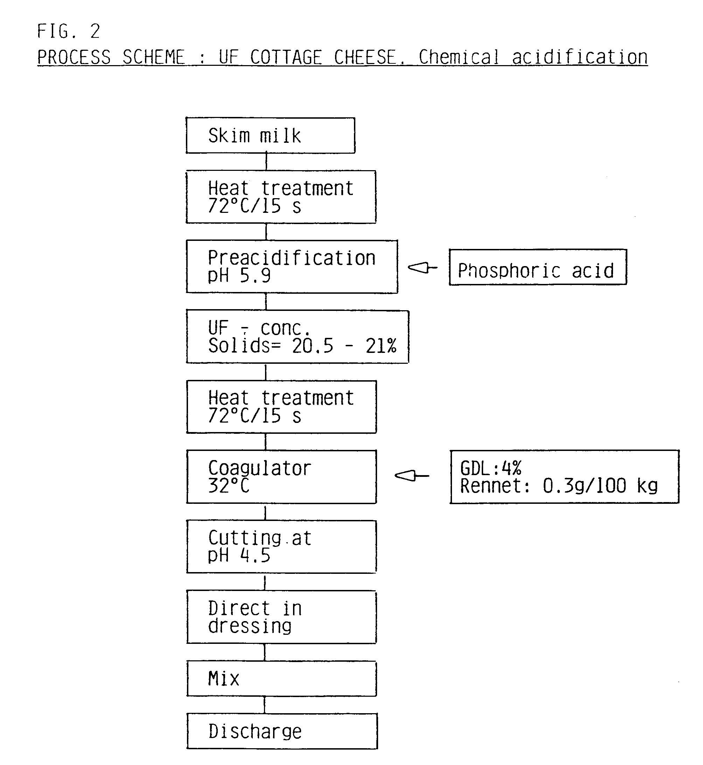

This examples follows the process scheme in fig. 2.

The process for producing the cheese grains is performed in the same manner as described in example 1. After the cutting, the cheese grains.fall directly down into a cream dressing with the same composition as in example 1 and in the same weight ratio of cheese grains to dressing. The ingredients are mixed, and the finished cottage cheese is packaged and stored in a cold store.

In this procedure without after-treatment of the cheese grains, 5.2 kg of skim milk with 3.6% protein content per kg of cheese grains are used, compared to 6.5 kg of skim milk per kg of cheese grains in the traditional process. The yield is calculated as an average of 6 tests.

### EXAMPLE 3

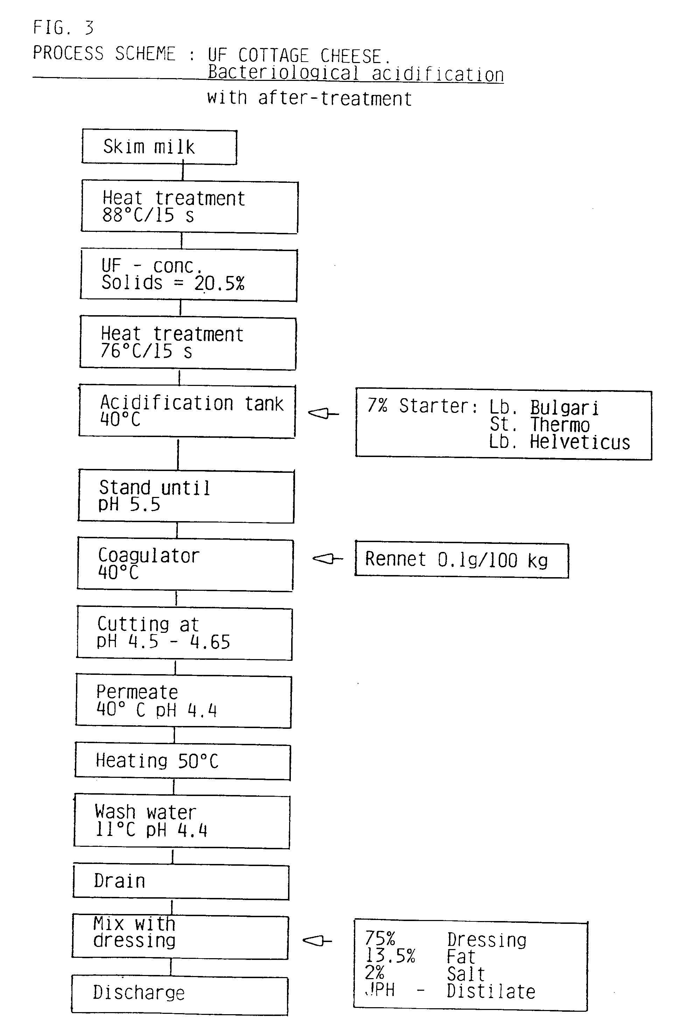

This example follows the process scheme in fig. 3.

Skim milk is heated to 88 °C for 15 seconds in a plate heat exchanger conventionally used for pasteurization. Then the milk is concentrated by ultrafiltration in a DDS UF module 37 to a solids content of 20.5% by weight. The retentate is heat treated in the plate heat exchanger at 75 °C for 15 seconds. Then the retentate is transferred to an acidification tank kept at 40 °C and admixed with 7% by weight of a starter culture containing Lactobacillus bulgaricus, Streptococcus thermophilus and Lactobacillus helveticus. The mixture is held in the acidification tank until the pH value has dropped to 5.5; then 0.1 g of rennet per 100 kg of mixture is added, and the mixture is introduced into a coagulator of the type described in example 1, kept at 40 °C. The passage through the coagulator takes about 2 hours, and the mixture coagulates during this passage to form a curd having a pH value of 4.5-4.65 at the outlet from the coagulator. The curd is cut to cheese grains with a size of 4.5 mm, which fall down into a bath of permeate from the ultrafiltration having a temperature of 40 °C and a pH value of 4.4. The bath is heated to 50 °C, and after 15-20 minutes the permeate is drained, and the cheese grains are washed, drained and mixed with cream dressing as described in example 1. The finished cottage cheese is packaged and stored in a cold store.

The consumption of skim milk per kg of after-treated cheese grains in this procedure is approximately the same as in example 1.

### EXAMPLE 4

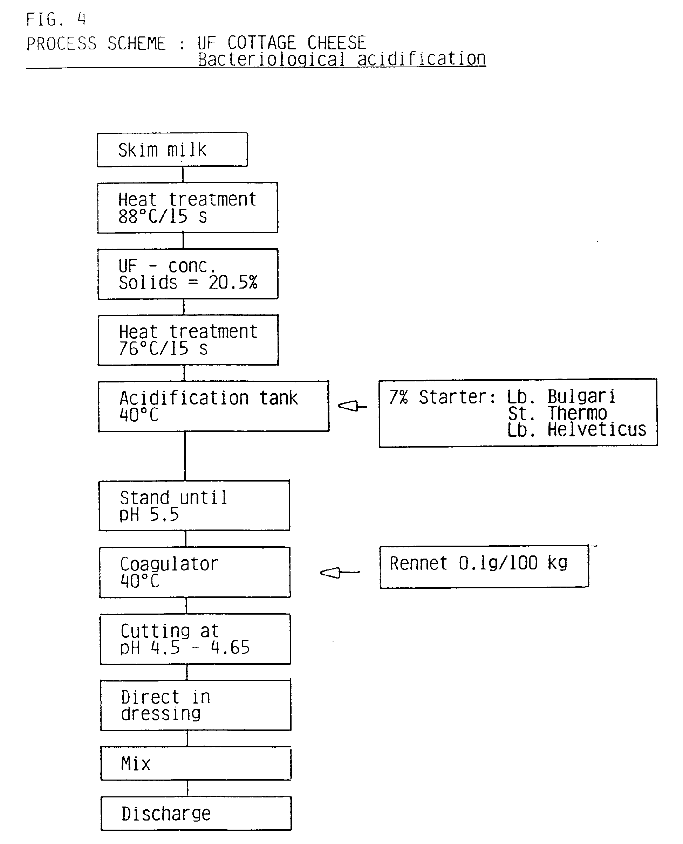

This example follows the process scheme in fig. 4.

The process for producing the cheese grains is performed in the same manner as described in example 3. After cutting, the cheese grains fall directly down into a cream dressing having the same composition as in example 1 and in the same weight ratio of cheese grains to dressing. The ingredients are mixed, and the finished cottage cheese is packaged and stored in a cold store.

The consumption of skim milk per kg of cheese grains in this procedure is approximately the same as in example 2.

## Claims

1. A process for continuous production of cottage cheese from ultrafiltered milk, wherein curd is produced by acidification, optionally with addition of rennet, and the cheese grains formed by the curd are mixed with dressing, optionally after conventional after-treatment, **characterized** in that milk is subjected to heat treatment at 65-100 °C for from 3 seconds to 15 minutes and, optionally after preacidification to a pH value of down to 5.8, is ultrafiltered to a solids content of 18.5-21% by weight, and that the retentate is heat treated at 65-100 °C for from 3 seconds to 15 minutes and is then either admixed with glucono-δ-lactone (GDL) in an amount giving a final pH value of 4.2-4.7, or admixed with a thermophilic starter culture and kept at 36-42 °C until a pH value of down 5.4 has been obtained, and then the mixture, optionally after addition of a small amount of rennet to improve the consistency of the product, is allowed to coagulate during passage through a coagulator with intermittent feed and standstill periods, kept at a temperature of 25-35 °C when the mixture has been chemically acidified, and 36-42 °C when a starter culture has been added to it, and the resulting curd with a pH value of 4.2-4.7, which is squeezed out of the coagulator, is cut to cheese grains which are mixed with dressing optionally after conventional after-treatment.

2. A process according claim 1, **characterized** in that the heat treated milk is acidified to a pH value of down to 5.8 and is ultrafiltered to a solids content of 18.5-21% by weight, and that the retentate is heat treated at 65-100 °C for from 3 seconds to 15 minutes and is then acidified additionally with glucono-δ-lactone (GDL) in an amount giving a final pH value of 4.2-4.7, following which the mixture, optionally after addition of a small amount of rennet to improve the consistency of the product, is allowed to coagulate during passage through a coagulator with intermittent feed and standstill periods, kept at a temperature of 25-35 °C, and the resulting curd with a pH value of 4.2-4.7, which is squeezed out of the coagulator, is cut to cheese grains which are mixed with dressing optionally after conventional after-treatment.

3. A process according to claim 1, **characterized** in that the heat treated milk, optionally after preacidification to a pH value of down to 5.8, is ultrafiltered to a solids content of 18.5-21% by weight, and that the retentate is heat treated at 65-100 °C for from 3 seconds to 15 minutes and is then admixed with a thermophilic starter culture and kept at 36-42 °C until a pH value of down to 5.4 has been obtained, following which the mixture, optionally after addition of a small amount of rennet to improve the consistency of the product, is allowed to coagulate with continued acidification to a pH value of 4.2-4.7 during passage through a coagulator with intermittent feed and standstill periods, kept at a temperature of 36-42 °C, and the resulting curd, which is squeezed out of the coagulator, is cut to cheese grains which are mixed with dressing optionally after conventional after-treatment.

4. A process according to any of claims 1-3, **characterized** in that the acidification of the heat treated milk is performed chemically by addition of phosphoric acid, citric acid or lactic acid.

5. A process according to any of claims 1-3, **characterized** in that the preacidification of the heat treated milk is performed by addition of inactivated, bacteriologically acidified skim milk.

6. A process according to claim 1 or 3, **characterized** in that the thermophilic starter culture is a starter containing Lactobacillus bulgaricus, Streptococcus thermophilus and Lactobacillus helveticus.

7. A process according to claim 6, **characterized** in that the starter is added in an amount of about 7% by weight.

8. A process according to any of the preceding claims, **characterized** in that the milk is skim milk.

9. A process according to any of the preceding claims, **characterized** in that the ultrafiltration is performed to a solids content in the retentate of 19.5-21% by weight, in particular about 20% by weight.

10. A process according to any of the preceding claims, **characterized** by using a coagulator of the type consisting of a long coagulator tube in which the acidified mixture is fed periodically at the inlet end of the coagulator tube in feed periods with intermediate standstill periods, the length of a feed period being selected so that no significant coagulation takes place in the mixture from its introduction into the coagulator tube to the subsequent standstill period, the length of a standstill period being selected so that the mixture after a standstill period in the coagulator tube forms a sufficiently firm coagulum for the new mixture fed in the subsequent feed period to be transported towards the outlet end of the coagulator tube as a coherent plug, the rate of the introduction of mixture into the coagulator tube and the length of the coagulator tube being adapted so that the residence time in the coagulator tube of the curd squeezed out through the outlet end comprises at least one feed period and one standstill period.

11. A process according to any of the preceding claims, **characterized** in that the formed cheese grains are after-treated by heating to maximun 55 °C in permeate with pH 4.2-7.0 and washing in cold water with pH 4.2-7.0 before they are mixed with dressing.

## Patentansprüche

1. Verfahren zur kontinuierlichen Herstellung von "Cottage Cheese" aus ultrafiltrierter Milch, worin Quark durch Ansäuerung, gegebenenfalls unter Zugabe von Lab, hergestellt wird und die aus dem Quark geformten Käsekörner, gegebenenfalls nach konventioneller Nachbehandlung,mit Dressing gemischt werden, **dadurch gekennzeichnet,** daß Milch 3 Sekunden bis 15 Minuten einer Hitzebehandlung bei 65-100 °C unterworfen wird, und gegebenenfalls nach Vor-Ansäuerung auf einen pH-Wert bis herab zu 5,8 bis auf einen Feststoffgehalt von 18,5 bis 21 Gew.-% ultrafiltriert wird, und daß der Rückstand bei 65-100 °C 3 Sekunden bis 15 Minuten hitzebehandelt wird, worauf entweder Glukono-δ-Lakton (GDL) in einer Menge, die einen End-pH-Wert von 4,2 bis 4,7 ergibt,beigemischt wird, oder eine thermophile Starterkultur beigemischt und bei 36-42 °C gehalten wird, bis ein pH-Wert bis herab zu 5,4 erreicht worden ist, und dann die Mischung, gegebenenfalls nach Zugabe einer kleinen Menge Lab, um die Konsistenz des Produkts zu verbessern, während des Durchfließens, mit intermittierenden Zugabe- und Stillstandsperioden, eines Koagulators, der bei einer Temperatur von 25-35 °C gehalten wird, wenn die Mischung chemisch angesäuert wurde und 36-42 °C, wenn eine Starterkultur zugefügt worden ist, koagulieren läßt und der resultierende Quark mit einem pH-Wert von 4,2-4,7, der aus dem Koagulator gedrückt wird, zu Käsekörnern zerschnitten wird, die, gegebenenfalls nach konventioneller Nachbehandlung, mit Dressing gemischt werden,

2. Verfahren nach Anspruch 1, **dadurch gekennzeichnet,** daß die hitzebehandelte Milch auf einen pH-Wert bis herab zu 5,8 angesäuert und bis zu einem Feststoffgehalt von 18,5-21 Gew.-% ultrafiltriert wird und daß der Rückstand bei 65-100 °C 3 Sekunden bis 15 Minuten hitzebehandelt wird, worauf zusätzlich mit Glukono-δ-Lakton (GDL) in einer Menge, die einen End-pH-Wert von 4,2 bis 4,7 ergibt, angesäuert wird, worauf man die Mischung, gegebenenfalls nach Zugabe einer kleinen Menge Lab, um die Konsistenz des Produkts zu verbessern, während des Durchfließens, mit intermittierenden Zugabe- und Stillstandsperioden, eines Koagulators, der bei einer Temperatur von 25-35 °C gehalten wird, koagulieren läßt und der resultierende Quark mit einem pH-Wert von 4,2-4,7, der aus dem Koagulator gedrückt wird, zu Käsekörnern geschnitten wird, die, gegebenenfalls nach konventioneller Nachbehandlung, mit Dressing gemischt werden,

3. Verfahren nach Anspruch 1, **dadurch gekennzeichnet,** daß die hitzebehandelte Milch, gegebenenfalls nach Vor-Ansäuerung auf einen pH-Wert bis herab zu 5,8, bis auf einen Feststoffgehalt von 18,5-21 Gew.-% ultrafiltriert wird und daß das zurückgehaltene Material bei 65-100 °C 3 Sekunden bis 15 Minuten hitzebehandelt wird, worauf eine thermophile Starterkultur beigemischt und bei 36-42 °C gehalten wird, bis ein pH-Wert bis herab zu 5,4 erreicht wird, worauf man die Mischung, gegebenenfalls nach Zugabe einer geringen Menge Lab, um die Konsistenz des Produktes zu verbessern, unter fortgesetztem Ansäuern auf einen pH-Wert von 4,2-4,7 während des Durchfließens, mit intermittierenden Zugabe- und Stillstandsperioden, eines Koagulators, der bei einer Temperatur von 36-42 °C gehalten wird, koagulieren läßt und der resultierende Quark, der aus dem Koagulator gedrückt wird, zu Käsekörnern zerschnitten wird, die, gegebenenfalls nach konventioneller Nachbehandlung, mit Dressing gemischt werden.

4. Verfahren nach einem der Ansprüche 1-3, **dadurch gekennzeichnet,** daß die Ansäuerung der hitzebehandelten Milch chemisch durch Zugabe von Phosphorsäure, Zitronensäure oder Milchsäure durchgeführt wird.

5. Verfahren nach einem der Ansprüche 1-3, **dadurch gekennzeichnet,** daß die Vor Ansäuerung der hitzebehandelten Milch durch Zugabe einer inaktivierten, bakteriologisch angesäuerten Magermilch durchgeführt wird.

6. Verfahren nach Anspruch 1 oder 3, **dadurch gekennzeichnet,** daß die thermophile Starterkultur ein Starter ist, der Lactobacillus bulgaricus, Streptococcus thermophilus und Lactobacillus helveticus enthält.

7. Verfahren nach Anspruch 6, **dadurch gekennzeichnet,** daß der Starter in einer Menge von ungefähr 7 Gew.-% zugefügt wird.

8. Verfahren nach einem der vorhergehenden Ansprüche, **dadurch gekennzeichnet,** daß die Milch Magermilch ist.

9. Verfahren nach einem der vorhergehenden Ansprüche, **dadurch gekennzeichnet,** daß die Ultrafiltration bis zu einem Feststoffgehalt des Rückstands von 19,5 bis 21 Gew.-%, insbesondere ungefähr 20 Gew.-%, durchgeführt wird.

10. Verfahren nach einem der vorhergehenden Ansprüche, **dadurch gekennzeichnet,** daß man einen Koagulator des Typs verwendet, der aus einem langen Koagulatorrohr besteht, in das die angesäuerte Mischung periodisch am Einlaßende des Koagulatorrohrs in Zugabeperioden mit dazwischenliegenden Stillstandsperioden zugegeben wird, wobei die Länge einer Zugabeperiode so gewählt wird, daß keine signifikante Koagulation in der Mischung zwischen ihrer Einführung in das Koagulatorrohr und der darauffolgenden Stillstandsperiode stattfindet, die Länge einer Stillstandsperiode so gewählt wird, daß die Mischung nach einer Stillstandsperiode in dem Koagulatorrohr ein genügend festes Koagulat bildet, um die neue Mischung, die in der darauffolgenden Zugabeperiode zugegeben wird, als zusammenhängender Pfropf in Richtung des Auslaßendes des Koagulatorrohrs zu transportieren, die Geschwindigkeit der Mischungszufuhr in das Koagulatorrohr und die Länge des Koagulatorrohres so angepaßt werden, daß die Verweildauer des Quarks, der durch das Auslaßende ausgedrückt wird, im Koagulatorrohr mindestens eine Zugabeperiode und eine Stillstandsperiöde umfaßt.

11. Verfahren nach einem der vorhergehenden Ansprüche, **dadurch gekennzeichnet,** daß die geformten Käsekörner durch Erhitzen auf maximal 55 °C in Filtrat mit einem pH-Wert von 4,2 bis 7,0 und Waschen in kaltem Wasser mit einem pH-Wert von 4,2 bis 7,0 nachbehandelt werden, bevor sie mit Dressing gemischt werden.

## Revendications

1. Procédé de production continue de fromage blanc granulé à partir de lait soumis à une ultrafiltration, dans lequel du caillé est produit par acidification, facultativement avec addition de présure, et les grains de fromage formés par le caillé sont mélangés avec un assaisonnement, facultativement après traitement ultérieur conventionnel, caractérisé en ce que du lait est soumis à un traitement thermique à 65-100°C pendant une durée comprise entre 3 s et 15 min et, facultativement après préacidification à un pH ramené à 5,8, à une ultrafiltration jusqu'à une teneur en matières solides comprise entre 18,5 et 21 % en poids et en ce que le rétentat est traité thermiquement à 65-100°C pendant une durée comprise entre 3 s et 15 min et est alors mélangé soit à une glucono-δ-lactone (GDL) en une quantité donnant un pH final compris entre 4,2 et 4,7, soit à une culture bactérienne d'acide lactique thermophile et est maintenu entre 36 et 42°C jusqu'à l'obtention d'un pH ramené à 5,4, et qu'on laisse alors coaguler le mélange, facultativement après addition d'une petite quantité de présure pour améliorer la consistance du produit, pendant son passage dans un coagulateur comportant des périodes intermittentes d'alimentation et de repos, et maintenu à une température comprise entre 25 et 35°C lorsque le mélange a été acidifié par voie chimique et entre 36 et 42°C lorsqu'on lui a ajouté une culture bactérienne d'acide lactique, et que le caillé obtenu à un pH compris entre 4,2 et 4,7, expulsé du coagulateur, est découpé en grains de fromage qui sont mélangés avec l'assaisonnement, facultativement après traitement ultérieur conventionnel.

2. Procédé selon la revendication 1, caractérisé en ce que le lait traité thermiquement est acidifié à un pH ramené à 5,8 et est soumis à une ultrafiltration jusqu'à une teneur en matières solides comprise entre 18,5 et 21 % en poids et en ce que le rétentat est traité thermiquement à 65-100°C pendant une durée comprise entre 3 s et 15 min et est ensuite acidifié additionnellement à l'aide de glucono-δ-lactone (GDL) en une quantité donnant un pH final compris entre 4,2 et 4,7, après quoi on laisse coaguler le mélange, facultativement après addition d'une petite quantité de présure pour améliorer la consistence du produit, durant son passage dans un coagulateur comportant des périodes intermittentes d'alimentation et de repos, et maintenu à une température comprise entre 25 et 35°C et que le caillé obtenu à un pH compris entre 4,2 et 4,7, expulsé du coagulateur, est découpé en grains de fromage qui sont mélangés avec l'assaisonnement, facultativement après traitement ultérieur conventionnel.

3. Procédé selon la revendication 1, caractérisé en ce que le lait traité thermiquement, facultativement après préacidification à un pH ramené à 5,8, est soumis à une ultrafiltration jusqu'à une teneur en matières solides comprise entre 18,5 et 21 % en poids et en ce que le rétentat est traité thermiquement à 65-100°C pendant une durée comprise entre 3 s et 15 min et est ensuite mélangé à une culture bactérienne d'acide lactique thermophile et maintenu entre 36 et 42°C jusqu'à l'obtention d'un pH ramené à 5,4, après quoi on laisse coaguler le mélange, facultativement après addition d'une petite quantité de présure pour améliorer la consistence du produit, sous acidification continue jusqu'à un pH compris entre 4,2 et 4,7, durant son passage dans un coagulateur comportant des périodes intermittentes d'alimentation et de repos, et maintenu à une température comprise entre 36 et 42°C et que le caillé obtenu, expulsé du coagulateur, est découpé en grains de fromage qui sont mélangés avec l'assaisonnement, facultativement après traitement ultérieur conventionnel.

4. Procédé selon l'une quelconque des revendications 1 à 3, caractérisé en ce que l'acidification du lait traité thermiquement s'effectue par voie chimique, par addition d'acide phosphorique, d'acide citrique ou d'acide lactique.

5. Procédé selon l'une quelconque des revendications 1 à 3, caractérisé en ce que la préacidification du lait traité thermiquement s'effectue par addition de lait écrémé inactivé, acidifié bactériologiquement.

6. Procédé selon la revendication 1 ou 3, caractérisé en ce que la culture bactérienne d'acide lactique thermophile est une culture bactérienne d'acide lactique contenant Lactobacillus bulgaricus, Streptococcus thermophilus et Lactobacillus helveticus.

7. Procédé selon la revendication 6, caractérisé en ce que la culture bactérienne d'acide lactique est ajoutée en une quantité d'environ 7 % en poids.

8. Procédé selon l'une quelconque des revendications précédentes, caractérisé en ce que lait est du lait écrémé.

9. Procédé selon l'une quelconque des revendications précédentes, caractérisé en ce que l'ultrafiltration est opérée jusqu'à une teneur en matières solides dans le rétentat comprise entre 19,5 et 21 % en poids, égale en particulier à environ 20 % en poids.

10. Procédé selon l'une quelconque des revendications précédentes, caractérisé par l'utilisation d'un coagulateur du type constitué par un long tube coagulateur dans lequel le mélange acidifié est introduit périodiquement à l'extrémité d'entrée du tube coagulateur pendant les périodes d'alimentation, avec des périodes de repos intermédiaires, la longueur d'une période d'alimentation étant sélectionnée de telle sorte qu'il ne se produise aucune coagulation significative dans le mélange de son introduction dans le tube coagulateur jusqu'à la période de repos suivante, la durée d'une période de repos étant sélectionnée de telle sorte que le mélange, après une période de repos dans le tube coagulateur, forme un coagulum suffisamment ferme pour que le nouveau mélange introduit durant la période d'alimentation suivante soit transporté vers l'extrémité sortie du tube coagulateur sous la forme d'un bouchon cohésif, la vitesse d'introduction du mélange dans le tube coagulateur et la longueur du tube coagulateur étant conçues de façon que la durée de séjour du caillé expulsé par l'extrémité sortie dans le tube coagulateur comprenne au moins une période d'alimentation et une période de repos.

11. Procédé selon l'une quelconque des revendications précédentes, caractérisé en ce que les grains de fromage formés sont traités ultérieurement par chauffage un maximum de 55°C dans du perméat à un pH compris entre 4,2 et 7,0 et par lavage à l'eau froide à un pH compris entre 4,2 et 7,0, avant leur mélange à l'assaisonnement.
